# NEUE EUROPÄISCHE PATENTSCHRIFT

(11) **EP 0 879 160 B2**
(45) Veröffentlichungstag und Bekanntmachung des Hinweises auf die Entscheidung über den Einspruch: **27.10.2004**
(45) Hinweis auf die Patenterteilung: 04.08.1999
(21) Anmeldenummer: 97917229.3
(22) Anmeldetag: 19.02.1997
(51) Int. Cl.: B60R 25/04

(54) **DIEBSTAHLSICHERUNGSEINRICHTUNG FÜR KRAFTFAHRZEUGE SOWIE VERFAHREN ZUR DIEBSTAHLSICHERUNG**
MOTOR VEHICLE ANTI-THEFT DEVICE AND METHOD
DISPOSITIF ANTIVOL POUR AUTOMOBILES ET PROCEDE ANTIVOL

(30) Priorität: 21.02.1996 DE 19606265
(43) Veröffentlichungstag der Anmeldung: 25.11.1998
(73) Patentinhaber: ADAM OPEL AG, 65423 Rüsselsheim (DE)
(72) Erfinder: HUBERTUS, Guido, D-65239 Hochheim (DE); PFEFFER, Thomas, D-64293 Darmstadt (DE)
(86) Internationale Anmeldenummer: PCT/DE1997/000302
(87) Internationale Veröffentlichungsnummer: WO 1997/030874

(56) Entgegenhaltungen:
- EP-A- 0 492 692
- EP-A- 0 600 243
- EP-A- 0 642 959
- EP-A- 0 671 528
- EP-A- 0 683 293
- EP-A- 0 694 451
- WO-A-93/05987
- WO-A-95/11820
- DE-A- 4 320 776
- DE-A- 4 333 474
- DE-A- 19 514 074
- DE-C- 4 331 664
- DE-C- 4 422 261
- GB-A- 2 289 357

## Beschreibung

Die Erfindung bezieht sich auf eine Diebstahlsicherungseinrichtung für Kraftfahrzeuge und auf ein Verfahren zur Diebstahlsicherung nach dem Oberbegriff der Patentansprüche 1 und 5.

Es wird ein personengebundener Transponder und fahrzeugseitig ein Immobilisator genutzt, um den Betrieb eines Verbrennungsmotors in Abhängigkeit von der Zugriffsberechtigung des Transponder-Inhabers zu beeinflussen. Dies erfolgt durch Eingriff in die Funktion eines Motorsteuergerätes (gilt sowohl für Ottomotoren als auch für Steuerungen bei Dieselmotoren). Verfahren und Vorrichtungen dieser Art sind bekannt.

Die DE-A-43 20 776 beinhaltet Aussagen zu einer Vorrichtung, bei der das codierte Signal eines Transponders drahtlos an einen Immobilisator übermittelt wird. Wird dieser Transponder-Identifikationscode vom Immobilisator als richtig (zulässig) erkannt, sendet der Immobilisator einen Frequenzcode (oder ein Erlaubnissignal wie in der DE-A-195 14 074) an das Motorsteuergerät, wo ein Vergleich mit einem abgelegten Frequenzcode erfolgt. Vergleichsabhängig wird dann die Motorfunktion freigegeben oder gesperrt. Bei der Übermittlung des Transponder-Identifikationscodes an den Immobilisator und der Übermittlung des Frequenzcodes an das Motorsteuergerät bestehen noch gewisse Eingriffsmöglichkeiten, die die Inbetriebnahme des Kraftfahrzeugs durch Unberechtigte ermöglichen.

Bei anderen Diebstahlsicherungseinrichtungen wird hier versucht Abhilfe zu schaffen, so daß beispielsweise auch ein "mitgehörter" Transponder-Identifikationscode nicht geeignet ist für die spätere unberechtigte Inbetriebnahme des Kraftfahrzeugs. Beispielsweise sind hier verschiedenste Wechselcodeverfahren bekannt.

Zwischen Transponder und Immobilisator werden keine konstanten und damit kopierbaren und dauerhaft nutzbaren Codes ausgetauscht, jedoch wird beispielsweise dem Motorsteuergerät wieder eine Freigabeinformation übermittelt. Diese kann zwar verschlüsselt sein, jedoch ist zumindest eine einmalige Inbetriebnahme des Kraftfahrzeugs möglich. Der Wunsch nach einer mehrmaligen Nutzung des Kraftfahrzeugs ist dann bereits nur mit hohem Aufwand erfüllbar.

In der EP-A-0 683 293 ist ein Verfahren zur Diebstahlsisherung beschrieben, bei dem einem Transponder eine verschlüsselte Information eines Immobilisators (Lesegerät) übermittelt wird. Durch geheime Verknüpfung mit Transponder-Festcodes wird dann ein Geheimtext generiert, der an den Immobilisator zu übermitteln ist. Dort wird dann auf vergleichbare Weise ein Immobilisator-Geheimtext bestimmt und mit dem Transponder-Geheimtext verglichen. Bei Übereinstimmung der Geheimtexte werden die zu sichernden Steuergeräte freigeschaltet, was codiert erfolgen kann. Die Sicherheit des Informationsaustauschs zwischen Transponder und Immobilisator ist hoch. Es kann jedoch wieder unbefugter Eingriff durch Ermittlung der Freigabeinformation, die an das Steuergerät gesendet wird, erfolgen. Selbst wenn der Immobilisator, wie angedeutet, als Bestandteil des Steuergerätes ausgebildet ist, muß eine (manipulierbare) Schnittstelle bestehen. Die Systemsicherheit ist zwar hoch, jedoch auf vergleichbare Weise wie bei Wechselcodeverfahren zu überwinden.

Es ist Aufgabe der Erfindung, eine Diebstahlsicherungseinrichtung zu schaffen, die mit Hilfe eines möglichst geringen Aufwandes herstellbar und zuverlässig im Betrieb ist. Des weiteren soll ein Verfahren zur Diebstahlsicherung entwickelt werden, welches keine sinnvolle Manipulation von außen zuläßt und nur durch sehr aufwendigen Austausch des gesamten Systems zur Diebstahlsicherung überwindbar ist.

Zur Lösung dieser Aufgaben zeichnet sich die Diebstahlsicherungseinrichtung nach dem Oberbegriff des Patentanspruchs 1 durch die kennzeichnenden Merkmale des Patentanspruchs 1 aus. Das erfindungsgemäße Verfahren zur Diebstahlsicherung ist durch die im Patentanspruch 6 angegebenen Merkmale gekennzeichnet. Einzelheiten der Erfindung ergeben sich aus den Patentansprüchen 2 bis 5 und 7 bis 11.

Ein Transponder in an sich bekannter Bauweise ist mit einem Zündschlüssel kombiniert und beinhaltet eine Sende- und Empfangsantenne sowie eine elektronische Rechen- und eine Speichereinheit. Zur Diebstahlsicherung eines bestimmten Kraftfahrzeuges können mehrere Transponder tauglich sein. Beispielsweise sind drei Transponder in einer Familie verteilt oder es existiert eine Mehrzahl von Transpondern in einem Fuhrpark, die dort für ein Kraftfahrzeug benötigt werden. Vorzugsweise sind die Transponder batterielos, also passiv ausgebildet.

Ein Immobilisator, der dem Kraftfahrzeug zugeordnet ist, besteht aus einer Sende- und Empfangsantenne, die im Bereich des Zündschlosses angeordnet ist. Über die Antenne ist der Transponder bei eingestecktem Zündschlüssel anregbar, und es sind Daten zwischen Transponder und Immobilisator austauschbar.

Der Immobilisator ist mit einem betriebsrelevanten Steuergerät des Kraftfahrzeugs, insbesondere mit einem die Funktion eines Verbrennungsmotors (Otto- oder Dieselmotor) steuernden Gerät, elektrisch verbunden. Der ordnungsgemäße Betrieb dieses Steuergerätes und damit des Verbrennungsmotors ist nur nach erfolgtem Nachweis der Zugriffsberechtigung des Transponder-Inhabers möglich.

Die Funktion des Immobilisators ist gegenüber bekannten Diebstahlsicherungseinrichtungen wesentlich verändert worden. Er hat ausschließlich die Aufgabe, die Verbindung zwischen Transponder und Motorsteuergerät in der Phase der Initialisierung herzustellen und damit den Datenaustausch zwischen diesen Geräten zu ermöglichen. Die Überprüfung der Zugriffsberechtigung erfolgt nicht mehr durch den Immobilisator, sondern direkt im Steuergerät, womit eine Fehlerquelle und eine Manipulationsmöglichkeit ausgeschaltet wurde. Der exakte Nachweis der Zugriffsberechtigung hat also durch Kommunikation zwischen Transponder und Motorsteuergerät zu erfolgen, wobei der Immobilisator nur noch die Aufgabe hat, diese Kommunikation zu ermöglichen und gegebenenfalls weniger relevante Funktionen zu schalten. Beispielsweise kann vom Immobilisator noch in Abhängigkeit vom Vorhandensein eines bekannten Transponders (eines der zum Fahrzeug gehörenden Transponder) eine Diebstahlwarnanlage ein- oder ausgeschaltet werden oder es können benutzerindividuelle Fahrzeugeinstellungen über den Immobilisator vorgenommen werden.

Die derart gestaltete Einrichtung zur Diebstahlsicherung arbeitet vorzugsweise nach folgendem Verfahren:

Eine bestimmte Anzahl von Transpondern wird dem Kraftfahrzeug zugeordnet, indem Speichereinheiten der Transponder eine spezifische Codierung erhalten. Die gespeicherten Informationen bestehen aus einem Sicherheitscode sowie einem Transponder-Identifikationscode. Die zum Kraftfahrzeug gehörenden Transponder-Identifikationscodes werden auch in Speichern des Immobilisators und gegebenenfalls des Motorsteuergerätes abgelegt, wobei im Motorsteuergerät auch der Sicherheitscode abgelegt wird.

Nach Einstecken des Zündschlüssels in das Zündschloß des Kraftfahrzeugs wird der Transponder vom Immobilisator über die jeweiligen Antennen angeregt und der Transponder-Identifikationscode wird zum Immobilisator übertragen. Dort findet eine erste Überprüfung statt, wobei festgestellt wird, ob einer der zum Kraftfahrzeug gehörenden Transponder die Kommunikation aufgenommen hat. Wenn ja, wird die Kommunikation zum Motorsteuergerät freigegeben, indem ein sonst anderweitig genutzter Eingang des Motorsteuergerätes entsprechend geschaltet wird.

Wird der Motor mit Hilfe des Zündschlüssels gestartet, signalisiert das Motorsteuergerät über ein Ausgangssignal (beispielsweise des Motorkontrolleuchtenausgangs) den Beginn der Kommunikation mit dem Transponder. Eine Information, insbesondere eine nicht konstante, willkürlich im Motorsteuergerät gebildete Zufallsinformation, wird an den Transponder übertragen. Dort wird die Zufallsinformation, der Transponder-Identifikationscode und die Geheiminformation mit Hilfe einer geheimen Rechenoperation zu einem Code verknüpft, der an das Motorsteuergerät übertragen wird. Im Motorsteuergerät erfolgt die gleiche geheime Rechenoperation zur Bildung eines Referenzcodes. Der dazu erforderliche Transponder-Identifikationscode des aktuell in Kommunikationsbereitschaft befindlichen Transponders kann dazu vom Immobilisator an das Motorsteuergerät übertragen werden. Andererseits können im Motorsteuergerät mit allen einzelnen zulässigen Transponder-Identifikationscodes mehrere Referenzcodes berechnet werden. Der im Transponder berechnete Code hat dann mit zumindest einem der Referenzcodes übereinzustimmen. Ist dies der Fall, wird der Motorbetrieb ordnungsgemäß vom Motorsteuergerät gesteuert. Anderenfalls ist die Motorfunktion zu sperren.

Eine detailliertere Beschreibung der Erfindung erfolgt anhand eines Ausführungsbeispiels, wobei die zugehörige Figur schematisch eine erfindungsgemäße Diebstahlsicherungseinrichtung zeigt.

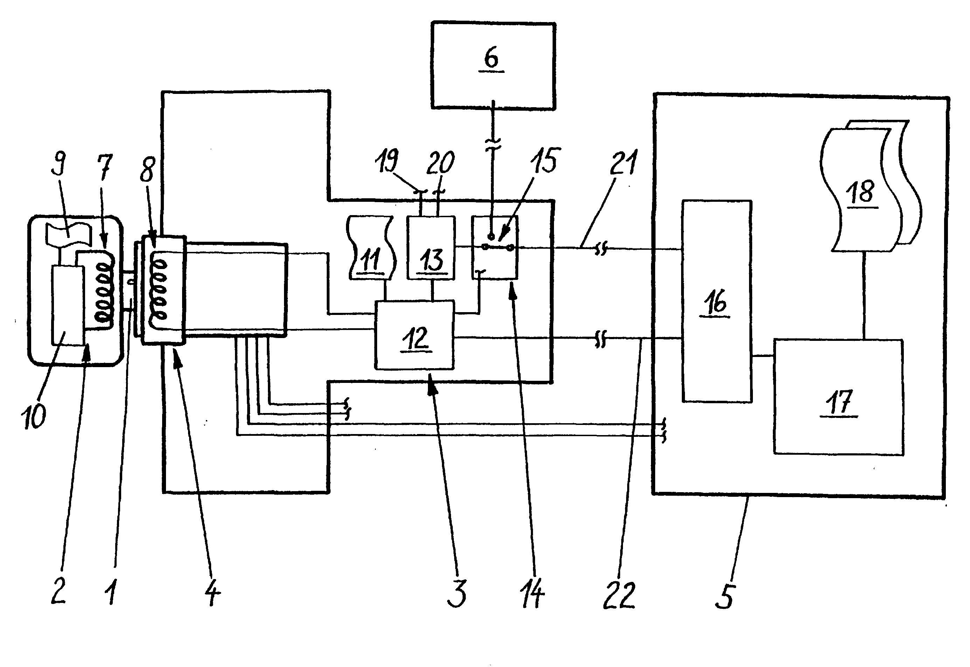

Die Diebstahlsicherungseinrichtung umfaßt zumindest einen mit einem Zündschlüssel 1 kombinierten passiven (batterielosen) Transponder 2. Ein Immobilisator 3 ist in unmittelbarer Nähe zu einem Zündschloß 4 des Kraftfahrzeugs angeordnet. Des weiteren ist in der Figur andeutungsweise ein Motorsteuergerät 5 sowie ein Diagnose-Tester 6 gezeigt.

Der Transponder 2 und der Immobilisator 3 weisen jeweils eine Sende- und Empfangsantenne 7, 8 auf, über die der Transponder 2 mit Energie versorgt wird und Daten ausgetauscht werden. Der Transponder 2 beinhaltet des weiteren eine elektronische Speichereinheit 9 und eine Recheneinheit 10. Der Immobilisator 3 umfaßt ebenfalls eine Speichereinheit 11 sowie eine Recheneinheit 12, eine Schnittstelle 13 und einen hier über ein Schaltgerät 14 gesteuerten Umschalter 15 (dargestellt in einer Stellung während der Initialisierungsphase). Das Motorsteuergerät 5 allgemein bekannter Bauart beinhaltet neben einer Schnittstelle 16, einem Mikroprozessor 17 und einer Speichereinheit 18 weitere hier nicht interessierende Bauelemente.

Die Diebstahlsicherungseinrichtung arbeitet auf die folgende Weise, womit auch das Verfahren zur Diebstahlsicherung erläutert wird:

Nach Einstecken des Zündschlüssels 1 in das Zündschloß 4, wird die Antenne 7 des Transponders 2 von der Antenne 8 des Immobilisators 3 angeregt. Es kommt zur Übertragung einer frequenz- oder amplitudenmodulierbaren elektrischen Spannung. Ein im Speicher 9 abgelegter Transponder-Identifikationscode wird über die Recheneinheit 10 und die Antennen 7, 8 zur Recheneinheit 12 des Immobilisators 3 übertragen. In der Speichereinheit 11 des Immobilisators 3 sind Identifikationscodes der zum Kraftfahrzeug gehörenden Transponder 2 gespeichert. Diese werden mit dem vom Transponder 2 übermittelten Identifikationscode verglichen. Ist einer der zulässigen Transponder 2 im Bereich des Zündschlosses 4 erkannt worden, werden von der Recheneinheit 12 des Immobilisators mehrere Funktionen gesteuert, jedoch wird der Betrieb des Kraftfahrzeugs noch nicht zugelassen. Einerseits können über Ausgänge 19, 20 der Schnittstelle 13 externe Funktionen angesteuert werden. Beispielsweise kann eine Diebstahlwarnanlage entsichert oder eine andere Schaltfunktion angesteuert werden. Zu diesem Zeitpunkt kann auch eine Verbindung 21 zum Motorsteuergerät 5 über den Umschalter 15 hergestellt werden, was aber auch erst später erfolgen kann, worauf weiter unten eingegangen wird. Der Umschalter 15 ist normalerweise in einer das Motorsteuergerät 5 mit dem Diagnose-Tester 6 verbindenden Stellung, so daß hier entsprechende Daten austauschbar sind. In der Initialisierungsphase wird diese Verbindung 21 zum Ein-/Ausgang des Motorsteuergerätes 5 wie bekannt zur Übertragung anderer Daten genutzt.

Wird die Zündung über den Zündschlüssel 1 betätigt, läuft im Motorsteuergerät 5 das Startprogramm ab, was dem Immobilisator 3 letztlich auch über einen Kontrollleuchtenausgang 22 des Motorsteuergerätes 5 signalisiert wird. Spätestens nach Anliegen dieses Signals trennt der Umschalter 15 den Diagnose-Tester 6 vom Motorsteuergerät 5 und verbindet die Schnittstellen 13 und 16 miteinander. Dies erfolgt also entweder nach Erkennen eines zulässigen Transponders 2 oder nach vorgenommenem Startbefehl durch ein Signal der Recheneinheit 12.

Nunmehr arbeitet der Immobilisator 3 ausschließlich als Durchgangsstation. Die Kommunikationsfähigkeit zwischen Transponder 2 und Motorsteuergerät 5 ist hergestellt. Der endgültige Identifikationsvorgang erfolgt durch Datenaustausch zwischen dem Motorsteuergerät 5 und dem Transponder 2:

Das Motorsteuergerät 5 sendet über die Verbindung 21 sowie die Antennen 8, 7 eine auf Basis einer Zufallsfunktion im Prozessor 17 generierte Zufallsinformation an den Transponder 2. Dort ist im Speicher 9 ein geheimer Algorithmus abgelegt, mit Hilfe dessen eine Verknüpfung der Zufallsinformation mit dem Transponder-Identifikationscode und einem transponderinternen Geheimcode erfolgt. Der berechnete Code wird zum Motorsteuergerät 5 übertragen. Der dortige Speicher 18 enthält (neben umfangreichen Daten und Programmen zur Motorsteuerung) ebenfalls die Geheiminformation und gegebenenfalls alle zugelassenen Transponder-identifikationscodes sowie den Rechenalgorithmus. Mit Hilfe der Zufallsinformation, der Geheiminformationen und je einem Transponder-Identifikationscode werden Referenzcodes ermittelt. Es ist jedoch auch möglich, daß der Transponder-Identifikationscode des aktuellen Transponders 2 an das Motorsteuergerät 5 übermittelt wird und damit nur ein Referenzcode zu bestimmen ist. Letztendlich wird der vom Transponder 2 übermittelte Code mit zumindest einem Referenzcode im Motorsteuergerät 5 verglichen. Bei Übereinstimmung wird die Motorfunktion freigegeben. Anderenfalls wird das Motorsteuergerät 5 außer Funktion gesetzt und der Motor abgestellt, falls er bereits angesprungen ist.

Nach Abschluß der Initialisierungsphase wird der Umschalter 15 im Immobilisator 3 wieder betätigt und die Verbindung 21 an den Diagnose-Tester 6 gelegt. Ist der Motor für eine bestimmte Zeit außer Betrieb, wird die Diebstahlsicherungseinrichtung automatisch "geschärft", d. h. der Identifikationsvorgang ist zu wiederholen, um die Funktionsfähigkeit des Motorsteuergerätes herzustellen.

Die so ausgebildete Diebstahlsicherungseinrichtung ist besonders einfach ausgebildet, da die vorhandenen Bauelemente des Motorsteuergerätes 5 genutzt werden. Der Immobilisator 3 wird nur noch zur Herstellung der Verbindung zwischen Transponder 2 und Motorsteuergerät 5 eingesetzt, hat aber keine Funktion mehr bei der eigentlichen Freischaltung des Motorsteuergerätes 5. Es werden keine konstanten "abhörbaren" Daten mehr zwischen Transponder 2 und Motorsteuergerät 5 übermittelt, mit Hilfe derer das Verfahren nachvollziehbar wäre. Die Zufallsinformation, die vom Motorsteuergerät 5 zum Transponder 2 übertragen wird, ist nur einmalig gültig. Der Rechenalgorithmus und die Geheiminformation sind in internen Speichern 9, 18 abgelegt und von dort nicht durch Unberechtigte auslesbar. Eine Übertragung dieser Informationen erfolgt gar nicht. Da die Zugriffsberechtigung im Motorsteuergerät 5 selbst überprüft wird, ist auch keine Freigabeinformation mehr an das Motorsteuergerät 5 zu übertragen, womit auch diese Eingriffsmöglichkeit beseitigt ist.

## Patentansprüche

1. Diebstahlsicherungseinrichtung für ein Kraftfahrzeug, enthaltend:
- einen mit einem Zündschlüssel (1) kombinierten Transponder (2) mit Sende- und Empfangsantenne (7) sowie mit Recheneinheit (10) und Speichereinheit (9),
- einen Immobilisator (3) mit Sende- und Empfangsantenne (8), welche im Bereich eines Zündschlosses (4) angeordnet ist, und
- ein mit dem Immobilisator (3) elektrisch verbundenes Motorsteuergerät (5) zur Beeinflussung der Funktion eines Verbrennungsmotors des Kraftfahrzeugs in Abhängigkeit vom Nachweis einer Zugriffsberechtigung des Transponder-Inhabers,
**dadurch gekennzeichnet, daß** das Motorsteuergerät (5) selbst zur Überprüfung der Zugriffsberechtigung des Transponder-Inhabers ausgelegt ist und der Immobilisator (3) dem diesbezüglichen Datenaustausch zwischen Transponder (2) und Motorsteuergerät (5) dient, jedoch weder eine Motorfreigabe- oder Sperrinformation generiert noch an das Motorsteuergerät (5) überträgt.

2. Diebstahlsicherungseinrichtung nach Anspruch 1, **dadurch gekennzeichnet, daß** nach Einschalten der Zündung mit Hilfe des Zündschlüssels (1) eine Verbindung zwischen Transponder (2) und Motorsteuergerät (5) hergestellt wird, wenn ein Identifikationscode des Transponders (2) im Immobilisator (3) als zulässiger Code erkannt wurde, wobei erst dann eine Kommunikation zwischen Motorsteuergerät (5) und Transponder (2) stattfinden kann.

3. Diebstahlsicherungseinrichtung nach Anspruch 1 und 2, **dadurch gekennzeichnet, daß** der Transponder (2) nur während der Phase der Überprüfung der Zugriffsberechtigung über eine elektrische Verbindung (21) zwischen Immobilisator (3) und einer Schnittstelle (16) des Motorsteuergerätes (5) mit dem Motorsteuergerät (5) kommuniziert und diese elektrische Verbindung (21) während des Motorbetriebes mit Diagnoseeinrichtungen verbunden ist, wobei die Umschaltung vom Immobilisator (3) gesteuert wird.

4. Diebstahlsicherungseinrichtung nach den Ansprüchen 1 bis 3, **dadurch gekennzeichnet, daß** dem Immobilisator (3) beim Motorstart ein Ausgangssignal des Motorsteuergerätes (5) zugeführt wird, welches den Vorgang der Kontrolle der Zugriffsberechtigung initialisiert.

5. Diebstahlsicherungseinrichtung nach Anspruch 4, **dadurch gekennzeichnet, daß** das Ausgangssignal des Motorsteuergerätes (5) über einen Motorkontrolleuchtenausgang (22) des Motorsteuergerätes (5) an den Immobilisator (3) übermittelt wird.

6. Verfahren zur Diebstahlsicherung eines Kraftfahrzeuges, bei dem in Abhängigkeit vom Nachweis einer Zugriffsberechtigung der Betrieb eines Verbrennungsmotors des Kraftfahrzeugs beeinflußt wird, wobei die Zugriffsberechtigung durch Informationsaustausch zwischen einem personengebundenen Transponder (2) und einem Motorsteuergerät (5) unter Zwischenschaltung eines kraftfahrzeugseitigen Immobilisators (3) festgestellt wird, **dadurch gekennzeichnet, daß**
- eine Information vom Motorsteuergerät (5) zum Transponder (2) übertragen wird,
- im Transponder (2) ein Code aus gespeicherten Informationen und der Information des Motorsteuergerätes (5) berechnet wird,
- der berechnete Code zum Motorsteuergerät (5) übertragen wird,
- im Motorsteuergerät (5) ein Referenzcode aus gespeicherten Informationen und einer Information des Transponders (2) berechnet wird,
- der Code mit dem Referenzcode im Motorsteuergerät (5) verglichen wird und
- der Motorbetrieb bei Übereinstimmung von Code und Referenzcode freigegeben und bei mangelnder Übereinstimmung gesperrt wird.

7. Verfahren nach Anspruch 6, **dadurch gekennzeichnet, daß** vor der Kommunikation zwischen Motorsteuergerät (5) und Transponder (2) ein Transponder-Identifikationscode vom Immobilisator (3) abgefragt und auf seine Zulässigkeit hin überprüft wird und der Immobilisator (3) nur bei Zulässigkeit des Transponders (2) die unverfälschte Kommunikation ermöglicht und gegebenenfalls weitere Schaltfunktionen ausführt.

8. Verfahren nach Anspruch 6 und 7, **dadurch gekennzeichnet, daß** die Information, die vom Motorsteuergerät (5) zum Transponder (2) zur Berechnung des Codes übertragen wird, eine im Motorsteuergerät (5) erzeugte Zufallsinformation ist und die Information des Transponders (2) im Motorsteuergerät (5) zur Berechnung des Referenzcodes der Transponder-Identifikationscode ist.

9. Verfahren nach den Ansprüchen 6 bis 8, **dadurch gekennzeichnet, daß** der Code und der Referenzcode aus einer im Transponder (2) und im Motorsteuergerät (5) gespeicherten Geheiminformation, aus dem Transponder-Identifikationscode und aus der Zufallsinformation mit Hilfe eines Algorithmus berechnet wird.

10. Verfahren nach den Ansprüchen 6 bis 9, **dadurch gekennzeichnet, daß** alle zulässigen Transponder-Identifikationscodes im Motorsteuergerät (5) gespeichert sind und eine entsprechende Anzahl von Referenzcodes im Motorsteuergerät (5) berechnet und mit dem Code vom Transponder (2) verglichen wird.

11. Verfahren nach den Ansprüchen 6 bis 9, **dadurch gekennzeichnet, daß** der im Immobilisator (3) als zulässig erkannte Transponder-Identifikationscode an das Motorsteuergerät (5) weitergeleitet und dort zur Berechnung des Referenzcodes herangezogen wird.

## Claims

1. Anti-theft device for a motor vehicle, containing:
- a transponder (2) with transmitting and receiving aerial (7), combined with an ignition key (1), as well as with computing unit (1) and memory unit (9),
- an immobiliser (3) with transmitting and receiving aerial (8), which aerial is arranged in the region of an ignition lock (4), and
- an engine control device (5) electrically connected to the immobiliser (3) for influencing the operation of an internal combustion engine of the motor vehicle as a function of proof of authorised access of the transponder owner,
**characterised in that** the engine control device (5) itself is designed to check for authorised access of the transponder owner and the immobiliser (3) serves for data exchange in this respect between transponder (2) and engine control device (5), but neither generates nor transmits engine clearance or blocking information to the engine control device (5).

2. Anti-theft device according to claim 1, **characterised in that** after switching on the ignition by means of the ignition key (1) a connection is made between transponder (2) and engine control device (5) if an identification code of the transponder (2) has been recognised in the immobiliser (3) as an admissible code, wherein only then can communication take place between engine control device (5) and transponder (2).

3. Anti-theft device according to claims 1 and 2, **characterised in that** the transponder (2) communicates with the engine control device (5) only during the stage of checking for authorised access via an electrical connection (21) between the immobiliser (3) and an interface (16) of the engine control device (5) and this electrical connection (21) is connected to diagnostic means during engine running, switching being controlled by the immobiliser (3).

4. Anti-theft device according to claims 1 to 3, **characterised in that** during engine starting the immobiliser (3) is supplied with an output signal of the engine control device (5), which initialises the process of checking for authorised access.

5. Anti-theft device according to claim 4, **characterised in that** the output signal of the engine control device (5) is transmitted via an engine pilot lamp output (22) of the engine control device (5) to the immobiliser (3).

6. Method for the prevention of theft of a motor vehicle, in which operation of an internal combustion engine of the motor vehicle is influenced as a function of proof of authorised access, wherein authorised access is established by exchange of information between a personal transponder (2) and an engine control device (5) with the interposition of an immobiliser (3) on the motor vehicle, **characterised in that**
- information is transmitted from the engine control device (5) to the transponder (2),
- a code consisting of stored information and the information of the engine control device (5) is calculated in the transponder (2),
- the calculated code is transmitted to the engine control device (5),
- in the engine control device (5) is calculated a reference code consisting of stored information and information of the transponder (2),
- the code is compared with the reference code in the engine control device (5) and
- engine operation is cleared when the code and reference code match and blocked when there is no match.

7. Method according to claim 6, **characterised in that** before communication between engine control device (5) and transponder (2) a transponder identification code is scanned by the immobiliser (3) and checked for its admissibility, and the immobiliser (3) allows unfalsified communication and if necessary performs further switching functions only when the transponder (2) is admissible.

8. Method according to claims 6 and 7, **characterised in that** the information which is transmitted by the engine control device (5) to the transponder (2) for calculation of the code is random information generated in the engine control device (5) and the information of the transponder (2) in the engine control device (5) for calculation of the reference code is the transponder identification code.

9. Method according to claims 6 to 8, **characterised in that** the code and the reference code are calculated by means of an algorithm from secret information stored in the transponder (2) and in the engine control device (5), from the transponder identification code and from the random information.

10. Method according to claims 6 to 9, **characterised in that** all the admissible transponder identification codes are stored in the engine control device (5) and a corresponding number of reference codes are calculated in the engine control device (5) and compared with the code of the transponder (2).

11. Method according to claims 6 to 9, **characterised in that** the transponder identification code which is recognised as admissible in the immobiliser (3) is transmitted to the engine control device (5) and there used to calculate the reference code.

## Revendications

1. Dispositif antivol pour un véhicule automobile comprenant:
- un transpondeur (2) combiné à une clé de contact (1) et comportant une antenne d'émission et de réception (7) ainsi qu'une unité de calcul (10) et une unité de mémoire (9),
- un immobilisateur (3) avec une antenne d'émission et de réception (8) qui est disposée dans le voisinage d'une serrure de contact (4) et
- un appareil de commande de moteur (5) qui est connecté électriquement à l'immobilisateur (3) pour agir sur le fonctionnement d'un moteur à combustion interne du véhicule en fonction de la preuve d'une habilitation à intervenir du porteur du transpondeur,
**caractérisé par le fait que** l'appareil de commande de moteur (5) lui-même est agencé pour vérifier l'habilitation d'accès du porteur du transpondeur et que l'immobilisateur (3) assure l'échange de données correspondantes entre le transpondeur (2) et l'appareil de commande de moteur (5), mais ne génère pas d'information de déverrouillage ou de verrouillage du moteur, ni ne transmet à l'appareil de commande de moteur (5).

2. Dispositif antivol selon la revendication 1, **caractérisé par le fait qu'**après la fermeture du contact à l'aide de la clé de contact (1), une liaison est réalisée entre le transpondeur (2) et l'appareil de commande de moteur (5) lorsqu'un code d'identification du transpondeur (2) a été reconnu comme valide dans l'immobilisateur (3), une communication entre l'appareil de commande de moteur (5) et le transpondeur (2) ne pouvant avoir lieu qu'à partir de cet instant.

3. Dispositif antivol selon les revendications 1 et 2, **caractérisé par le fait que** le transpondeur (2) communique avec l'appareil de commande de moteur (5) par l'intermédiaire d'une liaison électrique (21) entre l'immobilisateur (3) et une interface (16) de l'appareil de commande de moteur (5), uniquement pendant la phase de contrôle d'habilitation et que ladite liaison électrique (21) est connectée à des dispositifs de diagnostic pendant le fonctionnement du moteur, la commutation étant gérée par l'immobilisateur (3).

4. Dispositif antivol selon les revendications 1 et 3, **caractérisé par le fait qu'**un signal de sortie de l'appareil de commande de moteur (5) est transmis à l'immobilisateur (3) lors du démarrage du moteur, lequel signal initialise le processus de contrôle de l'habilitation.

5. Dispositif antivol selon la revendication 4, **caractérisé par le fait que** le signal de base de l'appareil de commande de moteur (5) est transmis à l'immobilisateur (3) par l'intermédiaire d'une sortie de voyant de contrôle moteur (22) de l'appareil de commande de moteur (5).

6. Procédé de protection d'un véhicule contre le vol, dans lequel le fonctionnement d'un moteur à combustion interne du véhicule est influencé en fonction de la preuve apportée d'une habilitation, l'habilitation étant constatée par échange de données entre un transpondeur (2) affecté à la personne et un appareil de commande de moteur (5) avec un immobilisateur (3) interposé côté véhicule, **caractérisé par le fait que**
- une information est transmise de l'appareil de commande de moteur (5) au transporteur (2).
- dans le transpondeur (2), un code est calculé sur la base d'informations mémorisées et de l'information de l'appareil de commande de moteur (5),
- le code calculé est transmis à l'appareil de commande de moteur (5),
- dans l'appareil de commande de moteur (5), un code de référence est calculé sur la base d'informations mémorisées et d'une information en provenance du transpondeur (2),
- le code est comparé au code de référence dans l'appareil de commande de moteur (5) et
- le fonctionnement du moteur est autorisé lorsque le code et le code de référence concordent et est bloqué lorsqu'il n'y a pas concordance.

7. Procédé selon la revendication 6, **caractérisé par le fait qu'**avant la communication entre l'appareil de commande de moteur (5) et le transpondeur (2), un code d'identification de transpondeur est demandé par l'immobilisateur (3) et sa validité contrôlée et que l'immobilisateur (3) autorise la communication non brouillée et exécute le cas échéant d'autres fonctions seulement lorsque le transpondeur (2) est habilité.

8. Procédé selon les revendications 6 et 7, **caractérisé par le fait que** l'information transmise par l'appareil de commande de moteur (5) au transpondeur (2) pour le calcul du code est une information aléatoire produite dans l'appareil de commande de moteur (5) et l'information du transpondeur (2) dans l'appareil de commande de moteur (5) pour le calcul du code de référence est le code d'identification du transpondeur.

9. Procédé selon les revendications 6 à 8, **caractérisé par le fait que** le code et le code de référence sont calculés à l'aide d'un algorithme, sur la base d'une information secrète mémorisée dans le transpondeur (2) et dans l'appareil de commande de moteur (5), sur la base du code d'identification de transpondeur et sur la base de l'information aléatoire.

10. Procédé selon les revendications 6 à 9, **caractérisé par le fait que** tous les codes d'identification de transpondeur admissibles sont mémorisés dans l'appareil de commande de moteur (5) et qu'un nombre correspondant de codes de référence sont calculés dans l'appareil de commande de moteur (5) et comparés au code du transpondeur (2).

11. Procédé selon les revendications 6 à 9, **caractérisé par le fait que** le code d'identification de transpondeur reconnu comme valide dans l'immobilsateur (3) est transmis à l'appareil de commande de moteur (5) et y est utilisé pour le calcul du code de référence.
